(19) Europäisches Patentamt
European Patent Office
Office européen des brevets

(11) **EP 1 074 819 B1**

(12) **EUROPÄISCHE PATENTSCHRIFT**

(45) Veröffentlichungstag und Bekanntmachung des Hinweises auf die Patenterteilung:
**28.07.2010 Patentblatt 2010/30**

(51) Int Cl.:
***G01D 5/249*** *(2006.01)* ***H03M 1/00*** *(2006.01)*

(21) Anmeldenummer: **00114276.9**

(22) Anmeldetag: **04.07.2000**

(54) **Lenkwinkelsensor**

Steering angle sensor

Capteur d'angle de braquage

(84) Benannte Vertragsstaaten:
**DE ES FR GB IT**

(30) Priorität: **31.07.1999 DE 19936245**

(43) Veröffentlichungstag der Anmeldung:
**07.02.2001 Patentblatt 2001/06**

(73) Patentinhaber: **Valeo Schalter und Sensoren GmbH**
**74321 Bietigheim-Bissingen (DE)**

(72) Erfinder:
• **Ruff, Achim**
**74354 Besigheim (DE)**
• **Wigger, Bernd**
**74366 Kirchheim (DE)**

(56) Entgegenhaltungen:
**EP-A- 0 911 610      DE-A- 2 165 243**
**GB-A- 2 241 125**

**Beschreibung**

Die Erfindung betrifft einen Lenkwinkelsensor, insbesondere zur Bestimmung des Lenkwinkels eines Fahrzeuges, mit einem einen Code aufweisenden Codierelement, wobei der Code aus einzelnen Codeworten und die Codeworte aus einzelnen Bits zusammengesetzt sind, und mit einer die Codeworte abtastenden Abtasteinheit, wobei jeweils einem Codewort ein Lenkwinkel zugeordnet ist und der Lenkwinkel aus dem abgetasteten Codewort bestimmt wird. Dabei ist das Codierelement vorzugsweise mit dem Lenkrad bzw. der Lenksäule des Fahrzeugs drehfest gekoppelt. Auf diese Weise kann von der Drehbewegung des Codierelements auf die Lenkradstellung geschlossen werden. Derartige Lenkwinkelsensoren werden benötigt für z.B. Regeleinrichtungen zur Regelung der Fahrstabilität von Fahrzeugen.

Als Schwierigkeit hat sich herausgestellt, dass zu einer sehr genauen Ermittlung des Lenkwinkels sehr feine Codestrukturen auf dem Codierelement zur Erzielung einer hohen Auflösung notwendig sind. Solche sehr feine Strukturen sind insbesondere gegen Schmutz, Staubpartikel oder auch die Bildung von Kondenswasser sehr empfindlich. Eine solche Empfindlichkeit kann die Funktionssicherheit des Lenkwinkelsensors nachteilig beeinflussen.

Aus der EP 0 911 610 A1 ist ein Lenkwinkelsensor mit den Merkmalen des Oberbegriffs des Anspruchs 1 bekannt geworden. Aus der GB 2 241 125 A ist ein digitaler Winkelcodierer bekannt geworden, bei dem mehrere Codespuren mit an unterschiedlichen Stellen angeordneten Sensoren abgetastet werden.

Der vorliegenden Erfindung liegt die Aufgabe zugrunde, einen Lenkwinkelsensor zu schaffen, der gegen Verschmutzungen unempfindlich ist und dennoch eine sehr hohe Auflösung des Lenkwinkels ermöglicht. Außerdem soll der Lenkwinkelsensor möglichst kleine Abmessungen aufweisen und funktionsgerecht angeordnet sein. Durch die Erfindung soll weiterhin die Winkelauflösung und Genauigkeit des Lenkwinkelsensors verbessert werden. Dabei sollen Voraussetzung für günstige Fehlererkennungsmöglichkeiten und Signalauswertungen geschaffen werden. Weiterhin soll der mechanische Aufbau des Lenkwinkelsensors einfach und möglichst mit einer Bauraumreduzierung verbunden sein. Der Lenkwinkelsensor soll außerdem die Komplexität der Elektronik reduzieren und kostengünstig sein.

Zur Lösung der Aufgabe wird ein Lenkwinkelsensor mit den Merkmalen des Anspruchs 1 vorgeschlagen.

Die Erfindung weist dabei den Vorteil auf, dass sich bei Änderung des Codewortes um lediglich ein Bit entweder ein benachbartes, gültiges Codewort vorliegt, oder ein ungültiges. Aufgrund des ungültigen Codewortes kann eine Fehlererkennung und Fehlerbehebung stattfinden. Dadurch, dass die Codeworte lediglich aus verschiedenen Bits zusammengesetzt sind, werden diejenigen Codeworte vermieden, welche lediglich aus 1 oder 0 zusammengesetzt sind. Auch hierdurch wird eine mögliche Fehlerquelle ausgeschaltet. Beispielsweise ist ein Defekt der Abtasteinheit feststellbar, wenn das Codewort lediglich Nullen oder Einsen aufweist.

Bei einer der Erfindung ist ferner vorgesehen, dass die Abtasteinheit ein lineares Sensorarray ist und pro Codespur wenigstens ein Sensor zur Abtastung vorhanden ist. Bei der Verwendung von mehreren Sensoren zur Abtastung der selben Codespurd wird bei der Abtastung eine Redundanz erreicht, mittels der ein Ausfall einzelner Sensoren detektierbar ist.

Die Erfindung sieht zudem vor, dass mehrere Abtasteinheiten um einen Winkel δ phasenversetzt die Codespuren zeitgleich abtasten und die Einzelcodeworte der mehreren Abtasteinheiten zu einem Codewort zusammengesetzt werden. Vorteilhafterweise kann durch eine solche Anordnung die Anzahl der Codespuren auf dem Codierelement stark reduziert werden, ohne dadurch die Auflösung des Lenkwinkelsensors zu verringern. Vielmehr wird durch die Verwendung mehrerer phasenversetzter Abtasteinheiten die Auflösung des Lenkwinkelsensors um ein Vielfaches erhöht, wodurch insbesondere feine, verschmutzungsempfindliche und schwer fertigbare Strukturen auf dem Codierelement vermeidbar sind. Bei der Bildung des auf dem Codierelements vorhandenen Codes muss allerdings der Zusammenhang einer phasenversetzten Abtastung berücksichtigt werden.

Ferner sind n Codespuren nebeneinander auf einem Codierelement und m Abtasteinheiten vorhanden, wobei entsprechend den n Codespuren und den m Abtasteinheiten ein n mal m Bits enthaltendes Codewort abgetastet wird. Damit kann bei Vorhandensein von schon relativ wenig Codespuren, wodurch das Codierelement sehr klein gehalten werden kann, und einer entsprechend großen Anzahl von Abtasteinheiten ein Codewort mit entsprechend vielen Bits erzeugt werden, was eine entsprechend hohe Auflösung des Lenkwinkelsensors ergibt.

Nach einer besonders vorteilhaften Ausgestaltung des Lenkwinkelsensors weist der Code im Wesentlichen nebeneinander liegende, eine Schrittweite aufweisende Codespuren auf, wobei die Schrittweite der Codespuren durch einzelne, die Bits generierende Spurelemente bestimmt wird. Außerdem ist die Abtasteinheit quer zu den Codespuren angeordnet. Ein Code in Form von nebeneinander angeordneten Codespuren mit entsprechenden Spurelementen hat sich bei der Anwendung in Lenkwinkelsensoren als sehr günstig herausgestellt.

Eine weitere vorteilhafte Ausbildung der Erfindung sieht vor, dass innerhalb einer Codespur wenigstens zwei oder mehr gleiche Spurelemente hintereinander angeordnet sind. Dadurch werden insbesondere sehr feine und störanfällige Strukturen auf dem Codierelement vermieden, die zudem aufwendig zu fertigen sind. Erfindungsgemäß sind dabei die Spurelementen innerhalb einer Codespur insbesondere nicht äquidistant angeordnet.

Nach einer Variante der Erfindung sind die Codespuren auf einer Kreisscheibe oder einer Mantelfläche eines Zylinders angeordnet, dessen Längsachse vorzugsweise der Lenkraddrehachse bzw. der Lenksäulenachse entspricht.

Damit wird eine sehr platzsparende Anordnung der Codierelemente erreicht, die dadurch auf einfache Weise mit dem Lenkrad bzw. der Lenksäule gekoppelt werden kann.

Nach einer Variante der Erfindung ergibt sich die Beziehung des Winkel δ des Phasenversatzes, der Auflösung des Lenkwinkelsensors in Grad und der Anzahl der Abtasteinheiten aus folgender Formel:

.

```
Phasenversatz δ modulo (Auflösung Lenkwinkelsensor * Anzahl der Abtasteinheiten) = Auflösung Lenkwinkelsensor;
```

.

mit Phasenversatz δ > Auflösung Lenkwinkelsensor * Anzahl der Abtasteinheiten

Der modulo mod ist dabei folgendermaßen definiert:

(x mod y) = (x - [x/y] * y), wobei [x/y] in der Gaussklammer stehen soll und das Ergebnis der Division x/y auf die nächst kleinere ganze Zahl abgerundet werden soll. Grundsätzlich sollte der Phasenversatz möglichst klein gewählt werden, da die einzelnen Abtasteinheiten in einem Bauteil, insbesondere in einem Abtastmodul, zusammengefasst werden können, welches entsprechend kleine Ausmaße aufweisen sollte.

Bei einer besonders bevorzugten Ausführungsform der Erfindung ist vorgesehen, dass das Codierelement vier Codespuren mit einer Schrittweite von 4,5° aufweist, dass drei Abtasteinheiten mit einem Phasenversatz von jeweils 6° vorhanden sind und die Auflösung des Lenkwinkelsensors 1,5° beträgt. Eine solche Ausführungsform hat sich als besonders günstig erwiesen.

Andere, ebenfalls günstige Ausführungsformen sind in den Unteransprüchen beschrieben.

In einer Weiterbildung der Erfindung ist eine die Anzahl der vollen Lenkradumdrehungen zählende Zähleinrichtung vorhanden. Eine solche Zähleinrichtung zählt die Umdrehungen des Lenkrads bzw. der Lenksäule gegenüber einer Nulllage, um den Lenkwinkel der Fahrzeugräder eindeutig bestimmen zu können. Eine solche Zähleinrichtung kann insbesondere ein Schrittschaltwerk mit Zähler sein, das in Abhängigkeit von den Umdrehungen des Lenkrades oder der Lenksäule schrittweise vorwärts oder rückwärts geschaltet wird, so dass die Zahl der gegen eine Nullstellung bestehenden Umdrehungen stets bekannt ist.

Andere Ausgestaltungen der Erfindung sehen vor, dass die Abtastung optisch, magnetisch oder induktiv erfolgt. Solche Arten der Abtastung sind funktionssicher und kostengünstig zu realisieren.

Nach einer Variante der Erfindung sind die Codespuren durchleuchtbar ausgestaltet. Eine solche Durchleuchtbarkeit ist insbesondere dann notwendig, wenn die Abtastung nach dem Durchlichtprinzip erfolgt.

Bei einer Weiterbildung der Erfindung sind zur optischen Abtastung des Codes Lichtleiter und/oder LEDs vorhanden, die ggf. eine definierte Taktung aufweisen. Eine solche Taktung, bei welcher die Lichtquelle idealerweise nur für sehr kurze Zeit angeschaltet wird, bringt insbesondere Vorteile bei der Verwendung des Durchlichtprinzips mit sich.

Eine andere Weiterbildung der Erfindung sieht vor, dass eine Beleuchtungseinheit vorhanden ist mit der die Abtasteinheit unabhängig von der Stellung des Codierelements beleuchtet werden kann. Dadurch kann die Funktion der Abtasteinheit, insbesondere die Funktion der einzelenen Sensorelemente, in jeder Stellung des Codierelements überprüft werden.

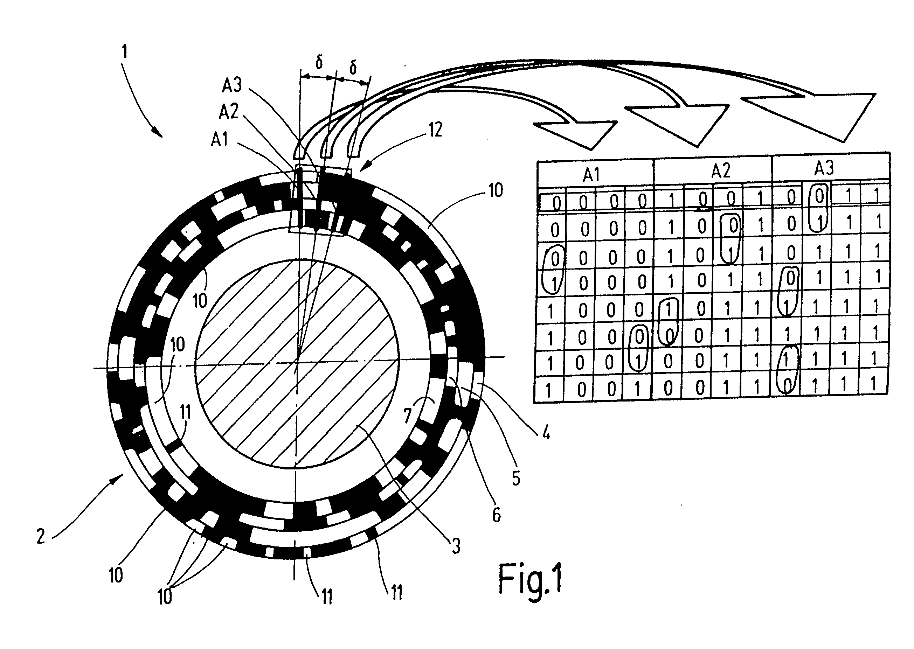

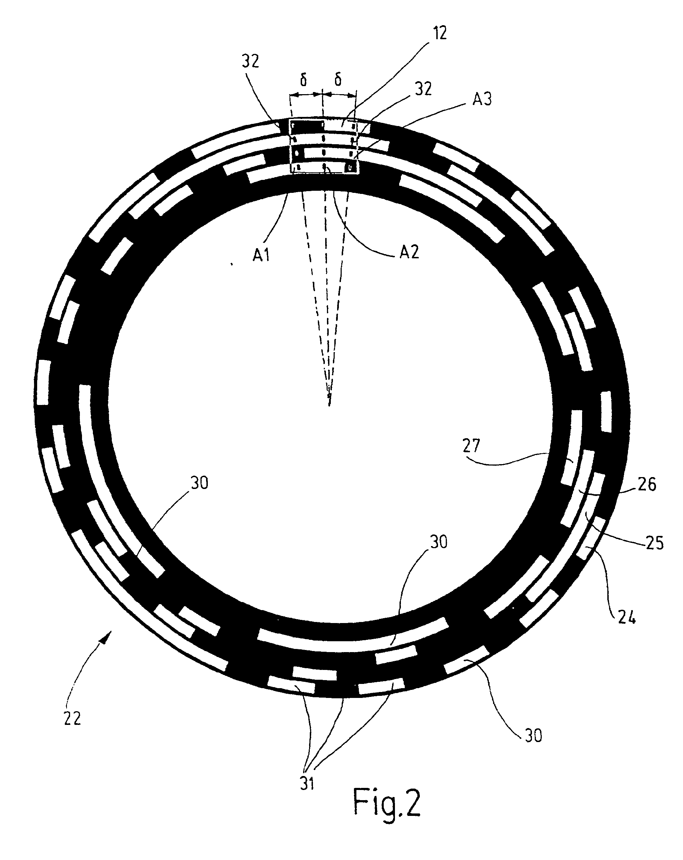

Bei einer Variante der Erfindung ist vorgesehen, dass das Codierelement eine ebene Codescheibe ist, auf welcher die Codespuren als konzentrische Ringe angeordnet sind und dass die Spurelemente entsprechend der Anordnung nach Figur 1 oder Figur 2 auf der Codescheibe angeordnet sind. Gerade eine solche Anordnung hat sich als äußerst vorteilhaft und funktionssicher erwiesen.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

Es zeigen:

Figur 1    einen Lenkwinkelsensor mit schematischer Bildung des Codeworts,

Figur 2    eine Codescheibe mit Abtasteinheiten und

Figur 3    ein Abtastmodul mit drei Abtasteinheiten.

In der Figur 1 ist ein Lenkwinkelsensor 1 dargestellt, der insbesondere zur Bestimmung des Lenkwinkels eines Fahrzeugs vorgesehen ist. Der Lenkwinkelsensor 1 weist dabei ein Codierelement 2 auf, welches als ebene Codescheibe ausgebildet ist. Das Codierelement 2 eignet sich insbesondere zur Anbringung um eine Lenksäule 3, die in der Figur 1 im Querschnitt dargestellt ist. Das Codierelement 2 ist dabei mit der Lenksäule 3 drehfest verbunden. Auf dem Codierelement 2 sind vier Codespuren 4, 5, 6 und 7 vorhanden, die als konzentrische Ringe um die Lenksäule 3 ausgebildet sind. Die Codespuren 4 - 7 weisen dabei verschiedene Spurelemente 10 und Einzelspurelemente 11 auf. Die Einzelspurelemente 11 haben eine Schrittweite von 3° auf. Die Spurelemente 10 setzen sich aus mehreren selben, hintereinander liegenden Einzelspurelementen 11 zusammen, wodurch die Einzelspurelemente 11 innerhalb den Spurelementen 10 nicht als solche erkennbar sind. Deshalb zeigt die Figur 1 unterschiedlich lange Spurelemente 10, deren kleinstes gemeinsames Vielfaches ein Einzelspurelement 11 ist.

Der Lenkwinkelsensor nach Figur 1 weist ein Abtastmodul 12 auf, in welchem drei Abtasteinheiten A1, A2 und A3 quer zu den Codespuren 4 - 7 angeordnet sind. Die einzelnen Abtasteinheiten A1, A2 und A3 tasten dabei jeweils die vier nebeneinander liegenden Codespuren 4 - 7 ab. Die drei Abtasteinheiten A1, A2 und A3 sind, wie in Figur 1 deutlich zu erkennen ist, phasenversetzt über den Codespuren 4 - 7 angeordnet, wobei der Phasenversatz δ jeweils 7° beträgt.

Mittels den drei Abtasteinheiten A1, A2 und A3 werden drei Einzelcodewörter abgetastet, welche in der in Fig. 1 rechts dargestellten Tabelle nebeneinander zu sehen sind. Die Abtasteinheit A1 tastet dabei das Einzelcodewort 0000 ab, A2 1001 und A3 0011. Durch Aneinandersetzen der drei Einzelcodewörter wird das Codewort gebildet, welches aus 3 mal 4 = 12 Bits zusammengesetzt ist und folgendermaßen lautet: 000010010011. Erfindungsgemäß ist jedem Codewort ein Lenkwinkel zugeordnet, d.h. bei Abtastung eines entsprechenden Codeworts wird aufgrund des abgetasteten Codeworts der Lenkwinkel bestimmt.

In der Tabelle rechts neben dem Lenkwinkelsensor 1 in Figur 1 sind neben dem aktuellen Codewort weitere Codeworte angegeben, die sich bei einer Drehung des Codierelements 2 nach rechts ergeben. Der Code des Codierelements 2 zeichnet sich dadurch aus, dass sich die unmittelbar benachbarten Codeworte lediglich um ein Bit unterscheiden. Bei weiterer Drehung des Codierelemets 2 nach rechts ändert sich, wie aus der Figur 1 bzw. der Tabelle in Figur 1 ersichtlich ist, lediglich das zweite Bit der dritten Abtasteinheit A3. Bei Drehung in dieselbe Richtung ändert sich als nächstes das dritte Bit der Abtasteinheit A2, danach das erste Bit der Abtasteinheit A1. Die sich ändernden Bits sind in der Tabelle nach Figur 1 durch eine entsprechende Umrandung markiert.

Außerdem weist der Code des Codierelements 2 die Eigenschaft auf, dass lediglich Codeworte verwendet werden, die sich aus verschiedenen Bits zusammensetzen, die also nicht nur aus 1 oder 0 bestehen. Ein Auslassen dieser Codeworte dient zur Vermeidung möglicher Abtastfehler.

Der Code des Codierelements 2 ist zudem so gestaltet, dass während einer Umdrehung der Lenksäule 3 keine Wiederholung der Codeworte stattfindet. Damit ist eine eindeutige Zuordnung eines Codes zu einer Winkelstellung der Lenksäule gewährleistet.

Durch die in Figur 1 beschriebene Anordnung erhält man eine Auflösung des Lenkwinkelsensors von 1°, obwohl die Spurweite der Einzelspurelemente 3° beträgt.

Als Abtasteinheit A1, A2 und A3 wird jeweils ein lineares Sensorarray verwendet, welches pro Codespur ein Einzelabtastelement aufweist.

In der Figur 2 ist ein Codierelement 22 dargestellt, welches einen anderen Code aufweist, als das Codierelement 2 nach Figur 1. Das Codierelement 22 weist vier Codespuren 24, 25, 26, und 27 auf, wobei nach Figur 2 die Schrittweite der Codespuren 24 - 27 4,5° beträgt. Anders als das Codierelement 2 nach Figur 1 weist das Codierelement 22 nach Figur 2 innerhalb einer der Codespuren 24 - 27 keine Einzelspurelemente 11 auf, vielmehr sind die Codespuren derart ausgebildet, dass innerhalb einer Codespur 24 - 27 wenigstens zwei gleiche Spurelemente 30 hintereinander angeordnet sind. Deshalb sind in Figur 2 lediglich Doppelspurelemente 31 als kleinste Spurelementeinheit vorhanden. Sehr feine und damit aufwendig zu fertigende Spurelemente finden bei diesem Code keine Verwendung.

Die in Figur 2 dargestellten drei Abtasteinheiten A1, A2 und A3, welche in einem Abtastmodul 12 angeordnet sind, weisen jeweils einen Phasenversatz δ von 6° auf. In der

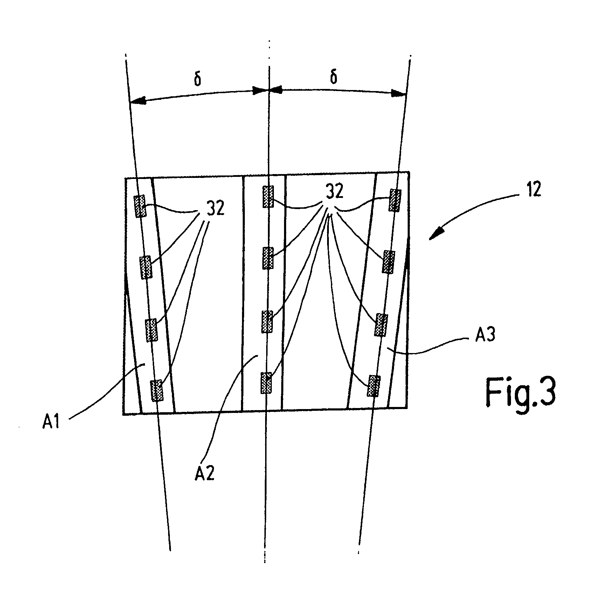

Figur 2 ist auch deutlich zu erkennen, dass die einzelnen Abtasteinheiten A1, A2 und A3 aus jeweils vier Einzelabtastelementen 32 zusammengesetzt sind. Dies wird insbesondere auch in Figur 3 deutlich, in der das Abtastmodul 12 mit den drei Abtasteinheiten A1, A2, A3 und den jeweiligen Einzelabtastelementen 32 vergrößert dargestellt ist.

Das in Figur 2 dargestellte Codierelement 22 weist eine relativ hohe Auflösung von 1,5° auf, obwohl die Spurweite des Codespuren 4,5° beträgt und die kleinsten Spurelemente Doppelspurelemente 30 mit einer Winkelweite von 9° sind. Deutlich zu erkennen ist, dass keine sehr feine Strukturen auf dem Codierelement 2 Codescheibe vorhanden sind, die einerseits sehr aufwendig zu fertigen und andererseits sehr schmutzempfindlich sind.

Um die Anzahl der vollen Lenkradumdrehungen bestimmen zu können, sind bei einem Lenkwinkelsensor 1 nach Figur 1 bzw. nach Figur 2 eine die vollen Lenkradumdrehungen zählende Zähleinrichtung separat vorhanden.

Ein Codierelement 2 bzw. 22 nach Figur 1 bzw. nach Figur 2, das lediglich vier Codespuren aufweist, ist sehr platzsparend. Bei einem Durchmesser einer Lenksäule von ca. 50 mm, und einer Spurbreite der einzelnen Codespuren von ca. 1,5 mm, ergibt sich ein Außendurchmesser eines solchen Codierelements von weniger als 60 mm.

Bei der Ausführung der Abtasteinheiten A1 bis A3 als optisches Array kann mit der Eigenschaft, dass bei der Abtastung des Codeworts über der Sensoreinheit nur für eine kurze Zeit belichtet wird, eine Lichtquelle idealerweise nur für sehr kurze Zeit angeschaltet werden. Bei entsprechend kurzen Belichtungszeiten kann eine vergleichsweise große Lichtmenge dazu verwendet werden. Bei Verwendung des Durchlichtprinzips ist ein Umlenken und Auffächern des Lichtbündels über einen Lichtleiter von der beispielsweise unten liegenden Lichtquelle über das Codierelement denkbar, wobei die Möglichkeit geschaffen erden kann, unabhängig von der Codierelementenstellung mit einer zusätzlichen Lichtquelle die Abtasteinheiten A1 bis A3 zu beleuchten. Dadurch kann die Funktion der Abtasteinheitn A1 bis A3 unabhängig von der Codescheibenposition überprüft werden.

Bei einer optischen Abtastung durch die Abtasteinheiten A1. bis A3 kann sowohl das Druchlicht- als auch das Reflexlichtverfahren zur Anwendung kommen. Die Informationen der Sensorarrays können je nach Anzahl der Sensorelemente entweder seriell oder parallel ausgelesen werden. Die Verarbeitung der Abtastsignale sowie die Ansteuerung der Lichtquellen erfolgt über einen Mikrocontroller.

Alle in der Beschreibung, den nachfolgenden Ansprüchen und der in der Zeichnung dargestellten Merkmale können sowohl einzeln als auch in beliebiger Kombination miteinander erfindungswesentlich sein.

**Patentansprüche**

1. Lenkwinkelsensor (1), insbesondere zur Bestimmung des Lenkwinkels eines Fahrzeuges, mit einem einen Code aufweisenden Codierelement (2, 22), auf dem n Codespuren (4-7, 24-27) nebeneinander vorhanden sind, wobei der Code aus einzelnen Codeworten und die Codeworte aus einzelnen Bits zusammengesetzten sind, und mit einer die Codeworte abtastenden Abtasteinheit (A1), wobei jeweils einem Codewort ein Lenkwinkel zugeordnet ist, sich während wenigstens einer Umdrehung des Lenkrades bzw. der Lenksäule (8) die Codewerte sich nicht wiederholen und der Lenkwinkel aus dem abgetasteten Codewort bestimmt wird, **dadurch gekennzeichnet,**
**dass** m Abtasteinheiten (A1,A2,A3) vorgesehen sind, die jeweils als lineares Sensorarray ausgebildet sind und pro Codespur einen Sensor zur Abtastung aufweisen,
**dass** die Abtasteinheiten (A1,A2,A3) um einen Winkel δ phasenversetzt die Codespuren (4-7, 24-27) zeitgleich abtasten, wobei die Einzelcodeworte (B) der Abtasteinheiten zu dem Codewort so zusammengesetzt werden, dass entsprechend den n Codespuren (4-7, 24-27) und den m Abtasteinheiten (A1, A2, A3) ein n mal m Bits enthaltendes Codewort abgetastet wird,
und **dass** der Code derart ausgebildet ist, dass Codeworte vermieden werden, welche lediglich aus 1 oder 0 zusammengesetzt sind
und **dass** benachbarte Codeworte sich lediglich um ein Bit unterscheiden.

2. Lenkwinkelsensor (1) nach Anspruch 1, **dadurch gekennzeichnet, dass** der Code im Wesentlichen nebeneinander liegende, eine Schrittweite aufweisende Codespuren (4-7, 24-27) aufweist, dass die Schrittweite der Codespuren (4-7, 24-27) durch einzelne, die Bits generierende, Spurelemente (10,11,30,31) bestimmt wird und dass die Abtasteinheit quer zu den Codespuren ( 4-7, 24-27) angeordnet ist.

3. Lenkwinkelsensor (1) nach einem der vorhergehenden Ansprüche, **dadurch gekennzeichnet, dass** innerhalb einer Codespur (24-27) wenigstens zwei oder mehr gleiche Spurelemente (30,31) hintereinander angeordnet sind.

4. Lenkwinkelsensor (1) nach einem der vorhergehenden Ansprüche, **dadurch gekennzeichnet, dass** die Codespuren (4-7, 24-27) auf einer Kreisscheibe oder einer Mantelfläche eines Zylinders angeordnet sind, dessen Längsachse vorzugsweise der Lenkraddrehachse bzw. Lenksäulenachse entspricht.

5. Lenkwinkelsensor (1) nach wenigstens einem der vorhergehenden Ansprüche, **dadurch gekennzeichnet, dass** sich die Beziehung des Winkel δ des Phasenversatzes, der Auflösung des Lenkwinkelsensors (1) in Grad und der Anzahl der Abtasteinheiten aus folgender Formel ergibt: Phasenversatz δ modulo (Auflösung Lenkwinkelsensor * Anzahl der Abtasteinheiten) = Auflösung Lenkwinkelsensor.

6. Lenkwinkelsensor (1) nach wenigstens einem der vorhergehenden Ansprüche, **dadurch gekennzeichnet, dass** das Codierelement (22) 4 Codespuren (24 - 27) mit einer Schrittweite von 4,5° aufweist, dass 3 Abtasteinheiten (A1, A2, A3) mit einem Phasenversatz von jeweils 6° vorhanden sind und die Auflösung des Lenkwinkelsensors 1,5° beträgt.

7. Lenkwinkelsensor (1) nach wenigstens einem der vorhergehenden Ansprüche, **dadurch gekennzeichnet, dass** das Codierelement 6 Codespuren mit einer Schrittweite von 1,5° aufweist, dass 2 Abtasteinheiten mit einem Phasenversatz von 8,25° vorhanden sind und die Auflösung des Lenkwinkelsensors 0,75° beträgt.

8. Lenkwinkelsensor (1) nach wenigstens einem der vorhergehenden Ansprüche, **dadurch gekennzeichnet, dass** das Codierelement (2) 4 Codespuren (4-7) mit einer Schrittweite von 3° aufweist, dass 3 Abtasteinheiten (A1, A2, A3) mit einem Phasenversatz von jeweils 7° vorhanden sind und die Auflösung des Lenkwinkelsensors 1° beträgt.

9. Lenkwinkelsensor (1) nach wenigstens einem der vorhergehenden Ansprüche, **dadurch gekennzeichnet, dass** das Codierelement 5 Codespuren mit einer Schrittweite von 3° aufweist, dass 3 Abtasteinheiten mit einem Phasenversatz von jeweils 7° vorhanden sind und die Auflösung des Lenkwinkelsensors 1° beträgt.

10. Lenkwinkelsensor (1) nach wenigstens einem der vorhergehenden Ansprüche, **dadurch gekennzeichnet, dass** das Codierelement 5 Codespuren mit einer Schrittweite von 2,25° aufweist, dass 3 Abtasteinheiten mit einem Phasenversatz von jeweils 5,25° vorhanden sind und die Auflösung des Lenkwinkelsensors 0,75° beträgt.

11. Lenkwinkelsensor (1) nach wenigstens einem der vorhergehenden Ansprüche, **dadurch gekennzeichnet**, das Codierelement 5 Codespuren mit einer Schrittweite von 1,5° aufweist, dass 3 Abtasteinheiten mit einem Phasenversatz von jeweils 3,5° vorhanden sind und die Auflösung des Lenkwinkelsensors 0,5° beträgt.

12. Lenkwinkelsensor (1) nach wenigstens einem der vorhergehenden Ansprüche, **dadurch gekennzeichnet, dass** das Codierelement 6 Codespuren mit einer Schrittweite von 2° aufweist, dass 2 Abtasteinheiten mit einem Phasenversatz von 11° vorhanden sind und die Auflösung des Lenkwinkelsensors 1° beträgt.

13. Lenkwinkelsensor (1) nach einem der vorhergehenden Ansprüche, **dadurch gekennzeichnet, dass** eine die Anzahl der vollen Lenkradumdrehungen zählende Zähleinrichtung vorhanden ist.

14. Lenkwinkelsensor (1) nach einem der vorhergehenden Ansprüche, **dadurch gekennzeichnet, dass** die Abtastung optisch, magnetisch oder induktiv erfolgt.

15. Lenkwinkelsensor (1) nach einem der vorhergehenden Ansprüche, **dadurch gekennzeichnet, dass** zur optischen Abtastung des Codes Lichtleiter und/oder LEDs vorhanden sind, die ggf. eine definierte Taktung aufweisen.

16. Lenkwinkelsensor (1) nach einem der vorhergehenden Ansprüche, **dadurch gekennzeichnet, dass** eine Beleuchtungseinheit vorhanden ist, mit der die Abtasteinheit unabhängig von der Stellung des Codierelements beleuchtet werden kann.

17. Lenkwinkelsensor (1) nach Anspruch 16, **dadurch gekennzeichnet, dass** die Codespuren (4-7, 24-27) durchleuchtbar ausgestaltet sind.

18. Lenkwinkelsensor (1) nach einem der vorhergehenden Ansprüche, **dadurch gekennzeichnet, dass** das Codierelement (2, 22) eine ebene Codescheibe ist, auf welcher die Codespuren (4-7, 24-27) als konzentrische Ringe angeordnet sind und dass die Spurelemente entsprechend der Anordnung nach Fig. 1 oder 2 auf der Codescheibe angeordnet sind.

**Claims**

1. Steering angle sensor (1), in particular for determining the steering angle of a vehicle, having a coding element (2, 22) which has a code and on which n code tracks (4-7, 24-27) are present beside one another, the code being composed of individual code words and the code words being composed of individual bits, and having a scanning unit (A1) which scans the code words, a steering angle being assigned to each code word, the code words not being repeated during at least one revolution of the steering wheel or steering column (8), and the steering angle being determined from the scanned code word, **characterized in that** m scanning units (A1, A2, A3) which are each in the form of a linear sensor array and have one scanning sensor for each code track are provided, **in that** the scanning units (A1, A2, A3) simultaneously scan the code tracks (4-7, 24-27) with a phase offset angle δ, the individual code words (B) of the scanning units being combined to form the code word in such a manner that a code word containing n times m bits is scanned according to the n code tracks (4-7, 24-27) and the m scanning units (A1, A2, A3), and **in that** the code is formed in such a manner that code words which are composed only of 1 or 0 are avoided,

and **in that** adjacent code words differ only by one bit.

2. Steering angle sensor (1) according to Claim 1, **characterized in that** the code essentially has code tracks (4-7, 24-27) which are beside one another and have a step size, **in that** the step size of the code tracks (4-7, 24-27) is determined by individual track elements (10, 11, 30, 31) which generate the bits, and **in that** the scanning unit is arranged transversely with respect to the code tracks (4-7, 24-27).

3. Steering angle sensor (1) according to one of the preceding claims, **characterized in that** at least two or more identical track elements (30, 31) are arranged behind one another inside a code track (24-27).

4. Steering angle sensor (1) according to one of the preceding claims, **characterized in that** the code tracks (4-7, 24-27) are arranged on a circular disc or a lateral surface of a cylinder, the longitudinal axis of which preferably corresponds to the axis of rotation of the steering wheel or to the steering column axis.

5. Steering angle sensor (1) according to at least one of the preceding claims, **characterized in that** the relationship between the phase offset angle δ, the resolution of the steering angle sensor (1) in degrees and the number of scanning units results from the following formula: phase offset δ modulo (resolution of the steering angle sensor * number of scanning units) = resolution of the steering angle sensor.

6. Steering angle sensor (1) according to at least one of the preceding claims, **characterized in that** the coding element (22) has 4 code tracks (24-27) with a step size of 4.5°, **in that** 3 scanning units (A1, A2, A3) each with a phase offset of 6° are provided, and the resolution of the steering angle sensor is 1.5°.

7. Steering angle sensor (1) according to at least one of the preceding claims, **characterized in that** the coding element has 6 code tracks with a step size of 1.5°, **in that** 2 scanning units with a phase offset of 8.25° are provided, and the resolution of the steering angle sensor is 0.75°.

8. Steering angle sensor (1) according to at least one of the preceding claims, **characterized in that** the coding element (2) has 4 code tracks (4-7) with a step size of 3°, **in that** 3 scanning units (A1, A2, A3) each with a phase offset of 7° are provided, and the resolution of the steering angle sensor is 1°.

9. Steering angle sensor (1) according to at least one of the preceding claims, **characterized in that** the coding element has 5 code tracks with a step size of 3°, **in that** 3 scanning units each with a phase offset of 7° are provided, and the resolution of the steering angle sensor is 1°.

10. Steering angle sensor (1) according to at least one of the preceding claims, **characterized in that** the coding element has 5 code tracks with a step size of 2.25°, **in that** 3 scanning units each with a phase offset of 5.25° are provided, and the resolution of the steering angle sensor is 0.75°.

11. Steering angle sensor (1) according to at least one of the preceding claims, **characterized in that** the coding element has 5 code tracks with a step size of 1.5°, **in that** 3 scanning units each with a phase offset of 3.5° are provided, and the resolution of the steering angle sensor is 0.5°.

12. Steering angle sensor (1) according to at least one of the preceding claims, **characterized in that** the coding element has 6 code tracks with a step size of 2°, **in that** 2 scanning units with a phase offset of 11° are provided, and the resolution of the steering angle sensor is 1°.

13. Steering angle sensor (1) according to one of the preceding claims, **characterized in that** a counting device which counts the number of full steering wheel revolutions is provided.

14. Steering angle sensor (1) according to one of the preceding claims, **characterized in that** the scanning operation is carried out optically, magnetically or inductively.

15. Steering angle sensor (1) according to one of the preceding claims, **characterized in that** light guides and/or LEDs which have defined timing, if appropriate, are provided for optical scanning.

16. Steering angle sensor (1) according to one of the preceding claims, **characterized in that** an illumination unit which can be used to illuminate the scanning unit independently of the position of the coding element is provided.

17. Steering angle sensor (1) according to Claim 16, **characterized in that** the code tracks (4-7, 24-27) can be transilluminated.

18. Steering angle sensor (1) according to one of the preceding claims, **characterized in that** the coding element (2, 22) is a planar code disc on which the code tracks (4-7, 24-27) are arranged as concentric rings, and **in that** the track elements are arranged on the code disc in a manner corresponding to the arrangement according to Fig. 1 or 2.

**Revendications**

1. Capteur d'angle de braquage (1), notamment pour déterminer l'angle de braquage d'un véhicule, comprenant un élément de codage (2, 22) présentant un code sur lequel n pistes de codage (4-7, 24-27) sont disposées les unes à côté des autres, le code étant constitué de mots de code individuels et les mots de code étant constitués de bits individuels, et comprenant une unité de palpage (A1) qui détecte les mots de code, un angle de braquage étant à chaque fois associé à un mot de code, les mots de code ne se répétant pas pendant au moins une rotation du volant ou de la colonne de direction (8) et l'angle de braquage étant déterminé à partir du mot de code détecté, **caractérisé en ce que** m unités de palpage (A1, A2, A3) sont prévues, lesquelles sont respectivement réalisées sous la forme d'un réseau de capteurs linéaire et présentent un capteur de palpage par piste de codage, que les unités de palpage (A1, A2, A3) palpent les pistes de codage (4-7, 24-27) simultanément en étant déphasées d'un angle δ, les mots de code individuels (B) des unités de palpage étant assemblés pour former le mot de code de telle sorte qu'un mot de code contenant n fois m bits, correspondant aux n pistes de codage (4-7, 24-27) et aux m unités de palpage (A1, A2, A3), est détecté, et que le code est configuré de manière à éviter les mots de code qui sont constitués uniquement de 1 ou de 0 et que les mots de code voisins se différentient uniquement par un bit.

2. Capteur d'angle de braquage (1) selon la revendication 1, **caractérisé en ce que** le code présente des pistes de codage (4-7, 24-27) pour l'essentiel disposées les unes à côté des autres et qui présentent un incrément, que l'incrément des pistes de codage (4-7, 24-27) est déterminé par des éléments de piste (10, 11, 30, 31) individuels qui génèrent les bits et que l'unité de palpage est disposée transversalement par rapport aux pistes de codage (4-7, 24-27).

3. Capteur d'angle de braquage (1) selon l'une des revendications précédentes, **caractérisé en ce qu'**au moins deux éléments de piste (30, 31) identiques ou plus sont disposés les uns derrière les autres à l'intérieur d'une piste de codage (24-27).

4. Capteur d'angle de braquage (1) selon l'une des revendications précédentes, **caractérisé en ce que** les pistes de codage (4-7, 24-27) sont disposées sur un disque circulaire ou sur une surface d'enveloppe d'un cylindre dont l'axe longitudinal correspond de préférence à l'axe de rotation du volant ou à l'axe de la colonne de direction.

5. Capteur d'angle de braquage (1) selon au moins une des revendications précédentes, **caractérisé en ce que** la relation entre l'angle δ du déphasage, la résolution du capteur d'angle de braquage (1) en degrés et le nombre d'unités de palpage résulte de la formule suivante : déphasage δ modulo (résolution du capteur d'angle de braquage * nombre d'unités de palpage) = résolution du capteur d'angle de braquage.

6. Capteur d'angle de braquage (1) selon au moins une des revendications précédentes, **caractérisé en ce que** l'élément de codage (22) présente 4 pistes de codage (24-27) ayant un incrément de 4,5°, qu'il existe 3 unités de palpage (A1, A2, A3) ayant respectivement un déphasage de 6° et la résolution du capteur d'angle de braquage est égale à 1,5°.

7. Capteur d'angle de braquage (1) selon au moins une des revendications précédentes, **caractérisé en ce que** l'élément de codage présente 6 pistes de codage ayant un incrément de 1,5°, qu'il existe 2 unités de palpage ayant un déphasage de 8,25° et la résolution du capteur d'angle de braquage est égale à 0,75°.

8. Capteur d'angle de braquage (1) selon au moins une des revendications précédentes, **caractérisé en ce que** l'élément de codage (2) présente 4 pistes de codage (4-7) ayant un incrément de 3°, qu'il existe 3 unités de palpage (A1, A2, A3) ayant respectivement un déphasage de 7° et la résolution du capteur d'angle de braquage est égale à 1°.

9. Capteur d'angle de braquage (1) selon au moins une des revendications précédentes, **caractérisé en ce que** l'élément de codage présente 5 pistes de codage ayant un incrément de 3°, qu'il existe 3 unités de palpage ayant respectivement un déphasage de 7° et la résolution du capteur d'angle de braquage est égale à 1°.

10. Capteur d'angle de braquage (1) selon au moins une des revendications précédentes, **caractérisé en ce que** l'élément de codage présente 5 pistes de codage ayant un incrément de 2,25°, qu'il existe 3 unités de palpage ayant respectivement un déphasage de 5,25° et la résolution du capteur d'angle de braquage est égale à 0,75°.

11. Capteur d'angle de braquage (1) selon au moins une des revendications précédentes, **caractérisé en ce que** l'élément de codage présente 5 pistes de codage ayant un incrément de 1,5°, qu'il existe 3 unités de palpage ayant respectivement un déphasage de 3,5° et la résolution du capteur d'angle de braquage est égale à 0,5°.

12. Capteur d'angle de braquage (1) selon au moins une des revendications précédentes, **caractérisé en ce que** l'élément de codage présente 6 pistes de codage ayant un incrément de 2°, qu'il existe 2 unités de palpage ayant un déphasage de 11° et la résolution du capteur d'angle de braquage est égale à 1°.

13. Capteur d'angle de braquage (1) selon l'une des revendications précédentes, **caractérisé en ce qu'**il existe un dispositif de comptage qui compte le nombre de tours complets du volant.

14. Capteur d'angle de braquage (1) selon l'une des revendications précédentes, **caractérisé en ce que** le palpage s'effectue de manière optique, magnétique ou inductive.

15. Capteur d'angle de braquage (1) selon l'une des revendications précédentes, **caractérisé en ce que** des fibres optiques et/ou des LED sont présentes pour le palpage optique du code, lesquelles présentent éventuellement un cadencement défini.

16. Capteur d'angle de braquage (1) selon l'une des revendications précédentes, **caractérisé en ce qu'**il existe une unité d'éclairage avec laquelle l'unité de palpage peut être éclairée indépendamment de la position de l'élément de codage.

17. Capteur d'angle de braquage (1) selon la revendication 16, **caractérisé en ce que** les pistes de codage (4-7, 24-27) sont configurées de manière à pouvoir être observées par transmission de lumière.

18. Capteur d'angle de braquage (1) selon l'une des revendications précédentes, **caractérisé en ce que** l'élément de codage (2, 22) est un disque de codage plan sur lequel les pistes de codage (4-7, 24-27) sont disposées sous la forme d'anneaux concentriques et que les éléments de piste sont disposés sur le disque de codage conformément à la disposition selon la figure 1 ou la figure 2.

A3
A2
A1

δ  δ

1

12

10

10

10

11

7

4

5

6

3

2

10

10

10

11

11

| A1 | | | | | A2 | | | | A3 | | |
|---|---|---|---|---|---|---|---|---|---|---|---|
| 0 | 0 | 0 | 0 | 1 | 0 | 0 | 1 | 0 | 0 | 1 | 1 |
| 0 | 0 | 0 | 0 | 1 | 0 | 0 | 1 | 0 | 1 | 1 | 1 |
| 0 | 0 | 0 | 0 | 1 | 0 | 1 | 1 | 0 | 1 | 1 | 1 |
| 0 | 0 | 0 | 0 | 1 | 0 | 1 | 1 | 0 | 1 | 1 | 1 |
| 1 | 0 | 0 | 0 | 1 | 1 | 1 | 1 | 1 | 1 | 1 | 1 |
| 1 | 0 | 0 | 0 | 0 | 0 | 1 | 1 | 1 | 1 | 1 | 1 |
| 1 | 0 | 0 | 1 | 0 | 0 | 1 | 1 | 1 | 1 | 1 | 1 |
| 1 | 0 | 0 | 1 | 0 | 0 | 1 | 1 | 0 | 1 | 1 | 1 |

Fig.1

EP 1 074 819 B1

Fig.2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0911610 A1

- GB 2241125 A